# EUROPEAN PATENT APPLICATION

(11) **EP 4 848 110 A1**
(43) Date of publication of application: **02.12.2026**
(21) Application number: 24920100.5
(22) Date of filing: 28.10.2024
(51) Int. Cl.: G06F 16/903, G06Q 10/0633

(54) **COMPUTER SYSTEM AND METHOD FOR SEARCHING FOR BUSINESS FLOWS**

(30) Priority: 24.01.2024 JP 2024008653
(71) Applicant: Hitachi, Ltd., Tokyo 100-8280 (JP)
(72) Inventor: YOSHIUCHI Hideya, Tokyo 100-8280 (JP)
(74) Representative: Mewburn Ellis LLP
(86) International application number: PCT/JP2024/038375
(87) International publication number: WO 2025/158742

(57) **Abstract**

A computer system holds a first database for managing a directed graph that represents a work flow defining procedures of tasks and includes nodes representing the tasks and directed edges connecting the nodes according to an order of the tasks, and a second database for managing a correspondence relationship between the node and the work flow, receives a search request including a search work flow expressed as a directed graph, generates a node pair which is a pair of the nodes included in the search work flow and in which an order relationship of the nodes in the search work flow is designated, specifies candidate work flows including all the nodes included in the search work flow by referring to the second database, and searches for the candidate work flow including all the generated node pairs from among the candidate work flows by referring to the first database.

## Description

### Incorporation by Reference

This application claims priority to Japanese Patent Application No. 2024-8653 filed on January 24, 2024, the contents of which are incorporated herein by reference.

### Technical Field

The present invention relates to a search technology in a system that manages data used for analysis of work performed according to a work flow.

### Background Art

Work such as production of products or materials and administrative procedures includes work performed according to a work flow defining the order of tasks. In order to achieve highly efficient work and the like, it is important to select a task to be performed and optimize an execution order of tasks.

A work flow can be represented as a directed graph including nodes representing tasks and directed edges connecting the nodes in the order of tasks. In an environment in which work is performed according to various work flows, useful information can be obtained by analyzing a result of the work corresponding to each work flow. Hitherto, it has been necessary for a user to manually select a work flow to be analyzed. However, in a case where the number of work flows is large, there is a problem in that the cost required for selecting the work flow increases. Therefore, technologies described in PTL 1 and PTL 2 have been known.

PTL 1 discloses a technology in which "a set of combinations of vertices of a query graph and vertices of a data graph is extracted as a failure pattern representing a factor of a failure of a search based on a failure of the search occurring in a process of the search when a subgraph isomorphic to the query graph, which is a graph of a query used for the search, is searched from the data graph, which is a graph of data of a search target, in a graph including vertices to which labels are given and edges connecting adjacent vertices, a state of the search matching the failure pattern is pruned, and the subgraph isomorphic to the query graph is searched from the data graph".

PTL 2 discloses a technology in which "a work flow is received as a search condition, a work flow identical or similar to the received work flow is searched, and when searching for the work flow, an input of the work flow as the search condition is received, a similarity of the compared work flow with respect to the work flow as the search condition is calculated based on the degree of matching of each of combinations of individual tasks included in each of the search condition and the work flow as a search target and an actor that performs the individual tasks, and a search result is presented based on the calculated similarity".

### Citation List

### Patent Literature

PTL 1: JP 2019-101610 A
PTL 2: JP 2012-243268 A

### Summary of Invention

### Technical Problem

In an environment in which work is performed according to various work flows, useful information can be obtained by analyzing a result of the work corresponding to each work flow. Since the work flow is expressed as a directed graph in consideration of the order, in the related art, there is a problem in that a search space is wide and the search of the work flow takes time. In addition, even in a technology that limits the search space using the similarity, there is a problem in that calculating the similarity is time-consuming.

An object of the present invention is to provide a technology for quickly searching for a work flow satisfying a condition from among a plurality of work flows.

### Solution to Problem

A representative example of the invention disclosed in the present application is as follows. That is, there is provided a computer system including: a processor; a storage device connected to the processor; and a network interface connected to the processor, in which the computer system is configured to: hold a first database for managing a directed graph that represents a work flow defining procedures of a plurality of tasks and includes nodes representing the tasks and directed edges connecting the nodes according to an order of the tasks, and a second database for managing a correspondence relationship between the node and the work flow; receive a search request including a search work flow expressed as a directed graph including at least two nodes; generate a first node pair which is a pair of the nodes included in the search work flow and in which an order relationship of the nodes in the search work flow is designated; specify the work flows including all the nodes included in the search work flow as candidate work flows by referring to the second database; and search for the candidate work flow including all the generated first node pairs from among the candidate work flows by referring to the first database, and output the candidate work flow as a search result.

### Advantageous Effects of Invention

According to the present invention, it is possible to quickly search for a work flow satisfying a designated condition. Problems, configurations, and effects other than those described above will become apparent by the following description of embodiments.

### Brief Description of Drawings

[FIG. 1] FIG. 1 is a diagram illustrating an example of a configuration of a system of a first embodiment.
[FIG. 2] FIG. 2 is a diagram illustrating an example of a configuration of a work data collection device of the first embodiment.
[FIG. 3] FIG. 3 is a diagram illustrating an example of a configuration of a work data management server of the first embodiment.
[FIG. 4] FIG. 4 is a diagram illustrating an example of a data structure of data stored in a work data database (DB) of the first embodiment.
[FIG. 5A] FIG. 5A is a diagram illustrating an example of a data structure of data stored in a work flow DB of the first embodiment.
[FIG. 5B] FIG. 5B is a diagram illustrating an example of a data structure of data stored in the work flow DB of the first embodiment.
[FIG. 6] FIG. 6 is a diagram illustrating an example of a data structure of data stored in a node/work flow correspondence management DB of the first embodiment.
[FIG. 7A] FIG. 7A is a diagram illustrating an example of a data structure of data stored in an integrated work flow DB of the first embodiment.
[FIG. 7B] FIG. 7B is a diagram illustrating an example of a data structure of data stored in the integrated work flow DB of the first embodiment.
[FIG. 7C] FIG. 7C is a diagram illustrating an example of a data structure of data stored in the integrated work flow DB of the first embodiment.
[FIG. 8A] FIG. 8A is a diagram for describing an example of an integrated work flow generated by the work data management server of the first embodiment.
[FIG. 8B] FIG. 8B is a diagram for describing an example of an integrated work flow generated by the work data management server of the first embodiment.
[FIG. 9] FIG. 9 is a sequence diagram for describing a flow of search processing for a work flow in the system of the first embodiment.
[FIG. 10] FIG. 10 is a view illustrating an example of a screen presented by the work data management server of the first embodiment.
[FIG. 11] FIG. 11 is a view illustrating an example of a screen presented by the work data management server of the first embodiment.
[FIG. 12] FIG. 12 is a view illustrating an example of a screen presented by the work data management server of the first embodiment.
[FIG. 13] FIG. 13 is a view illustrating an example of a screen presented by the work data management server of the first embodiment.
[FIG. 14] FIG. 14 is a view illustrating an example of a screen presented by the work data management server of the first embodiment.
[FIG. 15] FIG. 15 is a view illustrating an example of a screen presented by the work data management server of the first embodiment.
[FIG. 16] FIG. 16 is a flowchart for describing an example of work flow search processing performed by the work data management server of the first embodiment.
[FIG. 17] FIG. 17 is a flowchart for describing an example of work flow search processing performed by a work data management server of a second embodiment.
[FIG. 18] FIG. 18 is a view illustrating an example of a screen presented by a work data management server of a third embodiment.
[FIG. 19] FIG. 19 is a view illustrating an example of a screen presented by the work data management server of the third embodiment.

### Description of Embodiments

Hereinafter, embodiments of the present invention will be described with reference to the drawings. However, the present invention is not to be construed as being limited to the description of the following embodiments. Those skilled in the art can easily understand that the specific configuration can be changed without departing from the spirit or gist of the present invention.

In the configurations of the invention described below, the same or similar configurations or functions are denoted by the same reference signs, and an overlapping description is omitted.

Notations such as "first", "second", and "third" in the present specification and the like are attached to identify components, and do not necessarily limit the number or order.

### First Embodiment

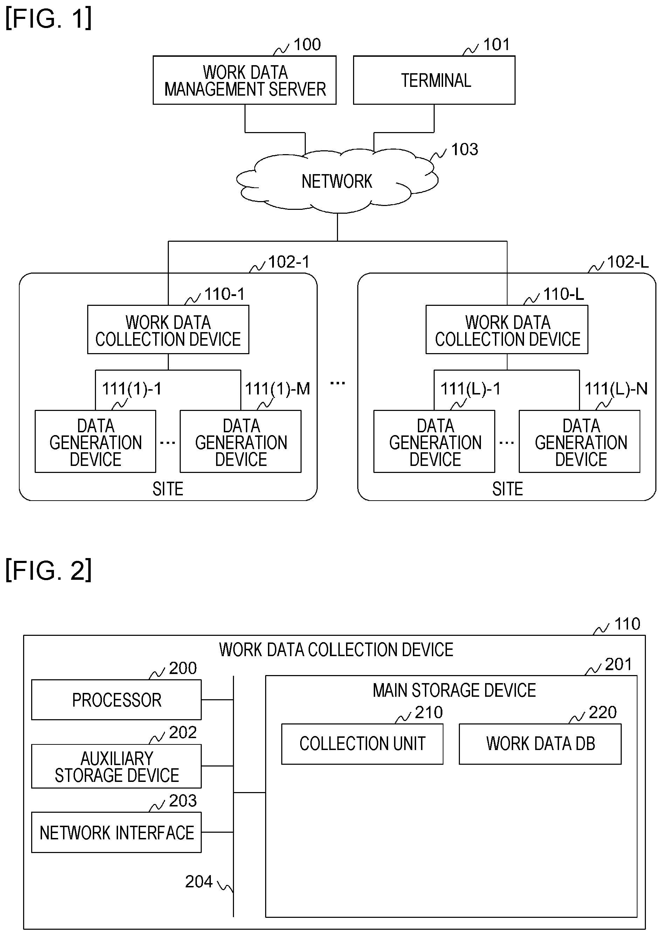

FIG. 1 is a diagram illustrating an example of a configuration of a system of a first embodiment.

The system includes a work data management server 100, a terminal 101, and a plurality of sites 102. The work data management server 100, the terminal 101, and the plurality of sites 102 are connected via a network 103 such as a wide area network (WAN) or a local area network (LAN).

In the site 102, work is performed according to a work flow. Examples of the work include application work, manufacturing work, production work, and performance test work. Note that the present invention is not limited to the contents of the work. The work flow represents procedures of a plurality of tasks. The work flow can be expressed as a directed graph including nodes representing the tasks and directed edges connecting the nodes in the order of tasks.

The site 102 includes a plurality of data generation devices 111 and a work data collection device 110. The data generation device 111 is a device that generates work data regarding the work, and is, for example, a sensor, a camera, or a terminal operated by an operator. The work data collection device 110 is a device that collects and manages the work data. The work data collection device 110 accumulates the work data together with information regarding the work flow. The information regarding the work flow is, for example, an identifier of the work flow.

The work data management server 100 acquires the work data from the work data collection device 110 of each site 102 and saves the work data. In addition, the work data management server 100 receives a request from the terminal 101 and performs various types of processing.

The terminal 101 is a terminal for transmitting various requests to the work data management server 100.

FIG. 2 is a diagram illustrating an example of a configuration of the work data collection device 110 of the first embodiment.

The work data collection device 110 includes a processor 200, a main storage device 201, an auxiliary storage device 202, and a network interface 203. The respective hardware elements are connected via a bus 204.

The processor 200 is a device that performs various computations, and executes a program stored in the main storage device 201. The processor 200 performs processing according to the program to operate as a functional unit (module) that implements a specific function. In the following description, when processing is described using a functional unit as a subject, the description indicates that the processor 200 executes a program for implementing the functional unit.

The main storage device 201 is a storage device that stores a program executed by the processor 200 and information executed by the program, and is, for example, a volatile or nonvolatile memory. The main storage device 201 is also used as a work area. The auxiliary storage device 202 is a large-capacity storage device that permanently stores information, and is, for example, a hard disk drive (HDD) or a solid state drive (SSD). The network interface 203 communicates with other devices via a network.

The program and information stored in the main storage device 201 may be stored in the auxiliary storage device 202. In this case, the processor 200 reads the program and information from the auxiliary storage device 202 and loads the program and information into the main storage device 201.

The main storage device 201 stores a program for implementing a collection unit 210, and a work data database (DB) 220. The collection unit 210 collects the work data from the data generation device 111. The work data DB 220 is a database that stores the work data.

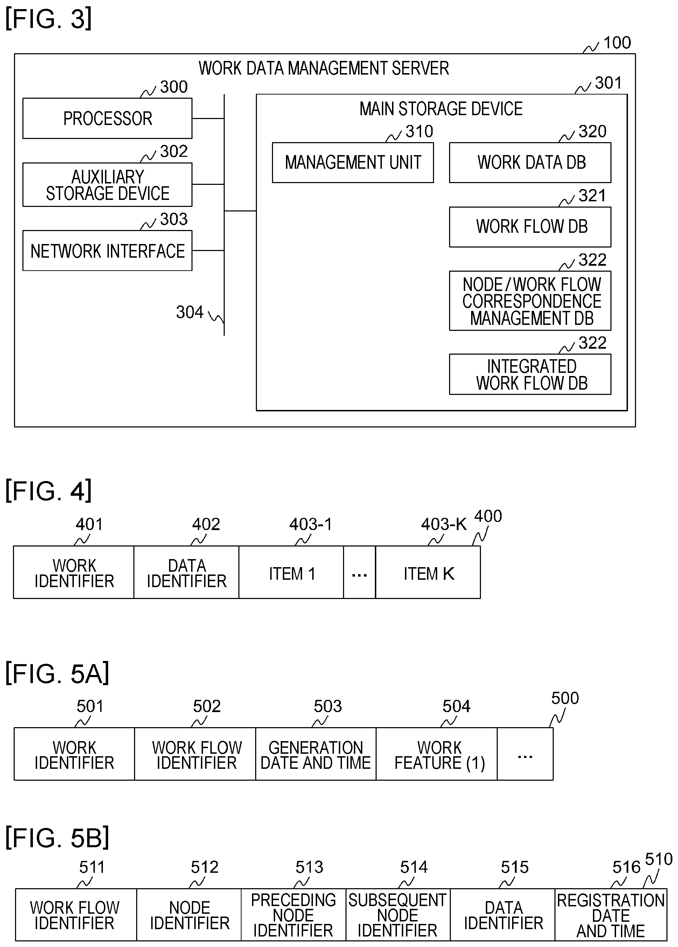

FIG. 3 is a diagram illustrating an example of a configuration of the work data management server 100 of the first embodiment.

The work data management server 100 includes a processor 300, a main storage device 301, an auxiliary storage device 302, and a network interface 303. The respective hardware elements are connected via a bus 304.

Since the processor 300, the main storage device 301, the auxiliary storage device 302, the network interface 303, and the bus 304 are the same hardware elements as the processor 200, the main storage device 201, the auxiliary storage device 202, the network interface 203, and the bus 204, the description thereof will be omitted.

The main storage device 301 stores a program for implementing a management unit 310. In addition, the main storage device 301 stores a work data DB 320, a work flow DB 321, a node/work flow correspondence management DB 322, and an integrated work flow DB 323.

The management unit 310 manages the work data and the work flow, and performs various types of processing according to a request from a user.

The work data DB 320 is a database that stores the work data. The work flow DB 321 is a database that stores the information regarding the work flow. The node/work flow correspondence management DB 322 is a database that stores information for managing a correspondence relationship between a node and a work flow. The integrated work flow DB 323 is a database that stores information regarding an integrated work flow used to search for a work flow.

For each functional unit included in the work data management server 100, a plurality of functional units may be integrated into one functional unit, or one functional unit may be divided into a plurality of functional units for each function.

Note that the work data management server 100 is implemented by using a physical computer. However, the work data management server 100 may also be implemented by using a virtualization technology. In addition, the functions of the work data management server 100 may be implemented using a computer system including a plurality of computers.

FIG. 4 is a diagram illustrating an example of a data structure of data stored in the work data DB 320 of the first embodiment.

The work data DB 320 stores work data 400. The work data 400 includes a work identifier 401, a data identifier 402, and a plurality of items 403.

The work identifier 401 is a field for storing an identifier of the work. The data identifier 402 is a field for storing an identifier of the work data. The item 403 is a field for storing an item value measured or acquired in the task. The number of items 403 to be included in the work data 400 can be arbitrarily set.

In a case where the work is material research and development, the work identifier is an identifier for specifying the task such as polymerization or stirring, and values characterizing task contents such as a task date and time, a task time, and a temperature are recorded as the items.

Note that data stored in the work data DB 220 managed by the work data collection device 110 has a similar data structure.

FIGS. 5A and 5B are diagrams illustrating examples of data structures of data stored in the work flow DB 321 of the first embodiment.

The work flow DB 321 stores work flow metadata 500 and node data 510.

The work flow metadata 500 is data for managing an outline of the work flow. The work flow DB 321 stores the work flow metadata 500 as many as the number of work flows. The work flow metadata 500 includes a work identifier 501, a work flow identifier 502, a generation date and time 503, and a work flow feature 504.

The work identifier 501 is a field for storing the identifier of the work. The work flow identifier 502 is a field for storing an identifier of the work flow. The generation date and time 503 is a field for storing a generation date and time of the work flow. The work flow feature 504 is a field for storing information characterizing the work flow. Examples of such information include a CO₂ reduction amount, power consumption, and the like of a production line in a factory. Note that the work flow metadata 500 does not have to include the work flow feature 504 or may include two or more work flow features 504.

The node data 510 is data for managing the node corresponding to the task included in the work flow. In the following description, the node corresponding to the task is also referred to as a task node. For one work flow, the node data 510 exists as many as the number of tasks included in the work flow. The node data 510 includes a work flow identifier 511, a node identifier 512, a preceding node identifier 513, a subsequent node identifier 514, a data identifier 515, and a registration date and time 516.

The work flow identifier 511 is a field for storing the identifier of the work flow. The node identifier 512 is a field for storing an identifier of the task node. The preceding node identifier 513 is a field for storing an identifier of a preceding task node for the task node corresponding to the node data 510. The subsequent node identifier 514 is a field for storing an identifier of a subsequent task node for the task node corresponding to the node data 510. Note that the node identifiers of the same task are assumed to be the same in the respective work flows.

The data identifier 515 is a field for storing an identifier designating the work data 400 of the task corresponding to the task node. The registration date and time 516 is a field for storing a final registration date and time of the work data 400.

For example, the user sets work flow definition information (the work flow metadata 500 and the node data 510) by using the terminal 101 and registers the work flow definition information in the work data management server 100.

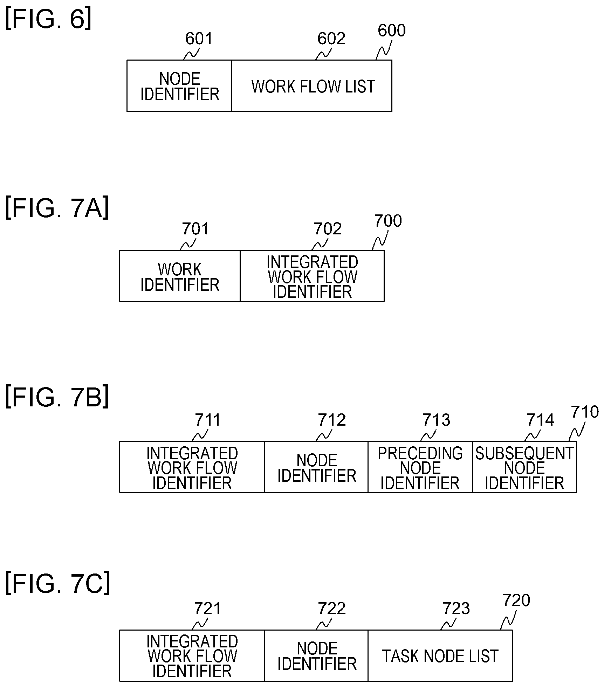

FIG. 6 is a diagram illustrating an example of a data structure of data stored in the node/work flow correspondence management DB 322 of the first embodiment.

The node/work flow correspondence management DB 322 stores correspondence relationship data 600. The correspondence relationship data 600 includes a node identifier 601 and a work flow list 602.

The node identifier 601 is a field for storing the identifier of the task node. The work flow list 602 is a field for storing the identifier of the work flow including the task node.

FIGS. 7A, 7B, and 7C are diagrams illustrating examples of data structures of data stored in the integrated work flow DB 323 of the first embodiment.

The integrated work flow DB 323 stores integrated work flow metadata 700, node data 710, and integrated node data 720.

The integrated work flow metadata 700 is data for managing an outline of the integrated work flow. The integrated work flow DB 323 stores the integrated work flow metadata 700 as many as the number of integrated work flows. The integrated work flow metadata 700 includes a work identifier 701 and an integrated work flow identifier 702.

The work identifier 701 is a field for storing the identifier of the work. The integrated work flow identifier 702 is a field for storing an identifier of the integrated work flow.

The node data 710 is data for managing nodes included in the integrated work flow. For one integrated work flow, the node data 710 exists as many as the number of nodes included in the integrated work flow. The integrated work flow includes the task node and an integrated node in which a plurality of task nodes are integrated. In the following description, the task node and the integrated node are collectively referred to as nodes unless otherwise distinguished.

The node data 710 includes an integrated work flow identifier 711, a node identifier 712, a preceding node identifier 713, and a subsequent node identifier 714.

The integrated work flow identifier 711 is a field for storing the identifier of the integrated work flow. The node identifier 712 is a field for storing the identifier of the node. For the task node, the identifier of the task node in the work flow is stored as it is, and for the integrated node, the identifier assigned to the integrated node is stored.

The preceding node identifier 713 is a field for storing the identifier of the preceding node for the node corresponding to the node data 710. The subsequent node identifier 714 is a field for storing the identifier of the subsequent node for the node corresponding to the node data 710.

The integrated node data 720 is data for managing an integrated node. The integrated node data 720 includes an integrated work flow identifier 721, a node identifier 722, and a task node list 723.

The integrated work flow identifier 721 is a field for storing the identifier of the integrated work flow. The node identifier 722 is a field for storing an identifier of the integrated node. The task node list 723 is a field for storing the identifiers of the task nodes included in the integrated node.

Next, processing performed by the work data management server 100 will be described. The work data management server 100 performs analysis processing for the correspondence relationship between the node and the work flow, integrated work flow generation processing, and work flow search processing.

The work data management server 100 performs the analysis processing for the correspondence relationship between the node and the work flow periodically or in a case where an execution instruction is received.

The work data management server 100 generates the correspondence relationship data 600 by referring to the work flow DB 321 and aggregating pieces of node data 510 having the same node identifier 512. The work data management server 100 stores the generated correspondence relationship data 600 in the node/work flow correspondence management DB 322.

The work data management server 100 performs the integrated work flow generation processing periodically or in a case where an execution instruction is received.

In the integrated work flow generation processing, the integrated node obtained by aggregating the plurality of task nodes is generated based on the presence or absence of the nodes of the respective work flows, the order of the nodes, and the like, and the integrated work flow including the task node and the integrated node is generated.

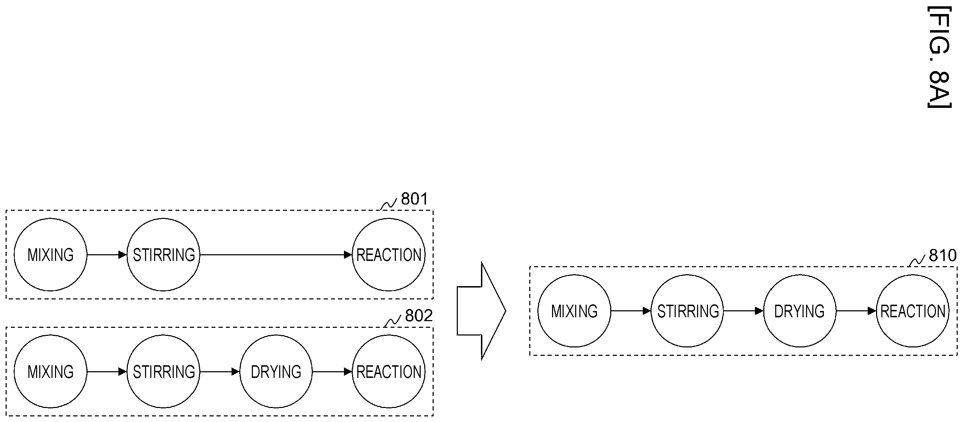

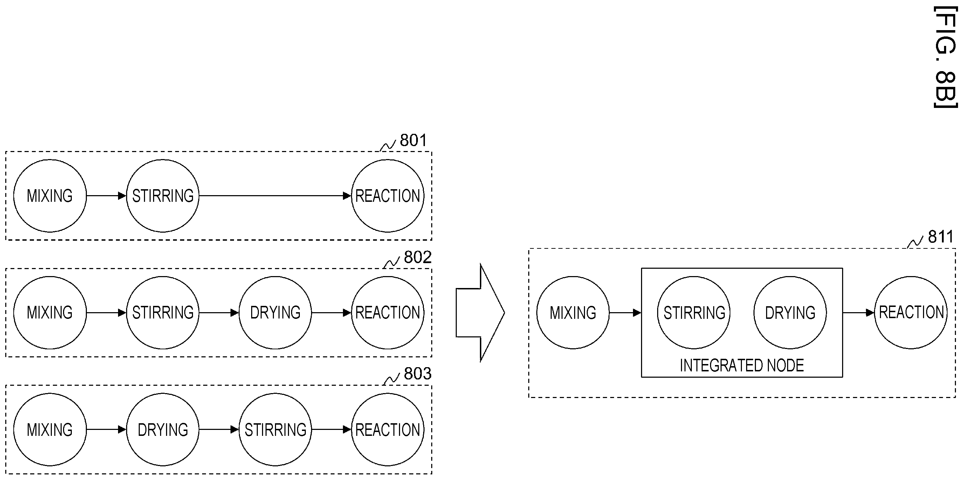

FIGS. 8A and 8B are diagrams illustrating examples of the integrated work flow generated by the work data management server 100 of the first embodiment.

Work flows 801 and 802 illustrated in FIG. 8A are examples of the work flow of the material research and development. The material research and development is a typical example in which the work flow is corrected and evaluated through trial and error, and new work flows are examined one after another according to experimental results. In this example, the work flow 801 includes three nodes (tasks) of mixing, stirring, and reaction, and indicates that the respective tasks are performed in this order. The work flow 802 includes four nodes of mixing, stirring, impression, and reaction, and indicates that the respective tasks are performed in this order.

The work data management server 100 generates an integrated work flow 810 by integrating the work flows 801 and 802. The integrated work flow 810 includes four nodes of mixing, stirring, drying, and reaction. Although the work flow 801 does not include a node corresponding to drying, the two work flows 801 and 802 can be managed as the integrated work flow 810 by assuming that drying is skipped in the integrated work flow 810.

The work flows 801, 802, and 803 in FIG. 8B are examples of the work flow of the material research and development. The work flow 803 has the same node configuration as the work flow 802, but the order of drying and stirring is different between the work flow 802 and the work flow 803. It is difficult to simply integrate the work flows 802 and 803. Therefore, drying and stirring are integrated into one integrated node as an unordered set, and the work flows are integrated. Such integration means that the task nodes included in the integrated node can be performed in any order in the integrated work flow. The work data management server 100 generates an integrated work flow 811 by integrating the work flows 801, 802, and 803.

In this way, by introducing the integrated node representing an unordered set of the task nodes, it is possible to generate the integrated work flow that uniformly represents a plurality of work flows.

By presenting the integrated work flow to the user, it is possible to facilitate designation of a search condition for the work flow. Note that the generation of the integrated work flow is not necessarily performed.

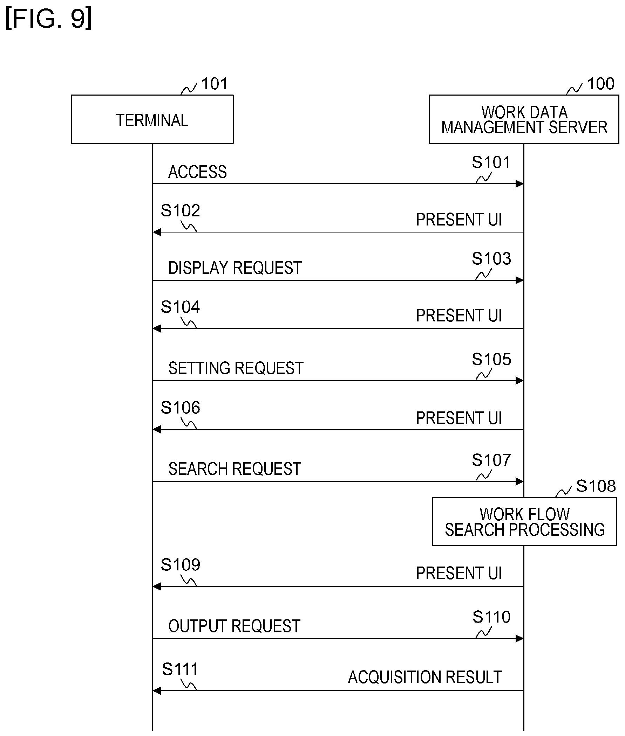

Next, work data search processing will be described. FIG. 9 is a sequence diagram illustrating a flow of the work flow search processing in the system of the first embodiment.

The user operates the terminal 101 to access the work data management server 100 (step S101).

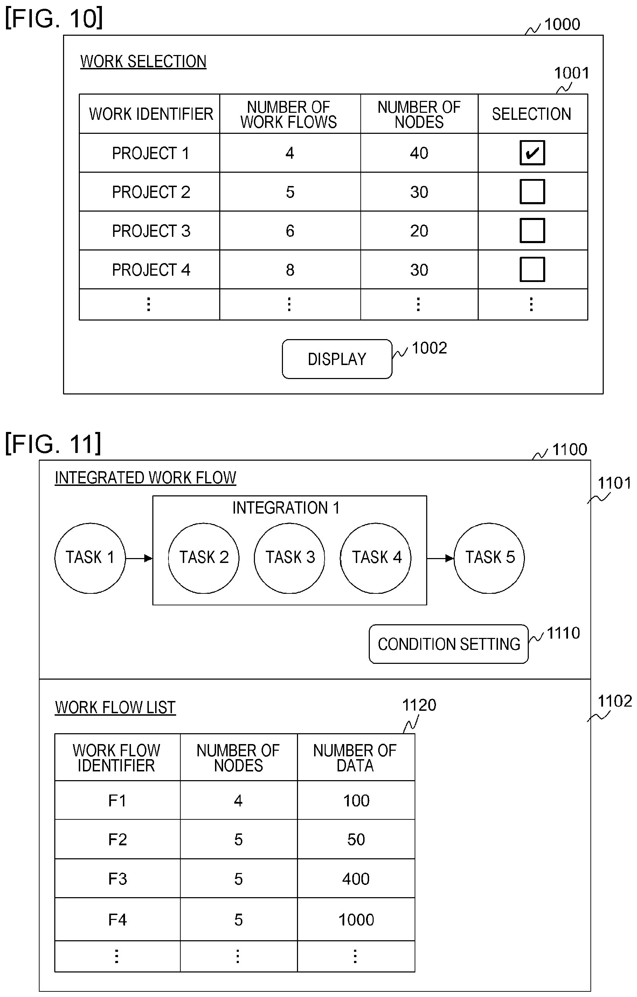

When the access is received, the work data management server 100 presents a screen (user interface) for receiving designation of the work (step S102). For example, a screen 1000 as illustrated in FIG. 10 is presented.

The screen 1000 includes a work list table 1001 and an operation button 1002. In the work list table 1001, entries including "work identifier", "number of work flows", "number of nodes", and "selection" are displayed. As the "number of nodes" of the work list table 1001, a total value of the task nodes of the respective work flows is stored. The work list table 1001 can be generated based on the work flow DB 321.

The user operates the "selection" of an entry corresponding to target work, and further operates the operation button 1002. At this time, the terminal 101 transmits a display request for the work flow to the work data management server 100 (step S103).

When the display request is received, the work data management server 100 presents a screen (user interface) for displaying the work flow (step S104). For example, a screen 1100 as illustrated in FIG. 11 is presented.

The screen 1100 includes a display field 1101 and a display field 1102. The display field 1101 is a field for displaying the integrated work flow of the selected work. A directed graph representing the integrated work flow and an operation button 1110 are displayed in the display field 1101. The operation button 1110 is an operation button for setting the search condition for the work flow. The display field 1102 is a field for displaying an outline of the work flow, and includes a work flow list table 1120. In the work flow list table 1120, entries including "work flow identifier", "number of nodes", and "number of data" are displayed. The "number of data" is a field for storing the number of pieces of work data acquired in the work performed according to the work flow.

The user operates the operation button 1110 after confirming information regarding the work flow displayed on the screen 1100. At this time, the terminal 101 transmits a setting request to the work data management server 100 (step S105).

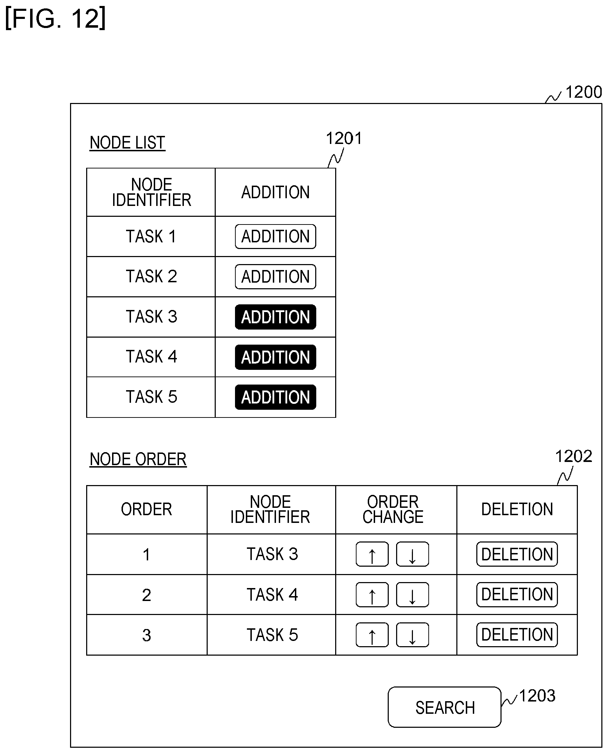

When the setting request is received, the work data management server 100 presents a screen (user interface) for setting the search condition (step S106). For example, a screen 1200 as illustrated in FIG. 12 is presented.

The screen 1200 includes a node selection table 1201, an order setting table 1202, and an operation button 1203.

The node selection table 1201 is a table for selecting the task node. In the node selection table 1201, the task nodes included in the integrated work flow are displayed. The user operates an addition button to select the task node to be used for the search. In FIG. 12, task 3, task 4, and task 5 are selected.

The order setting table 1202 is a table for setting the order of the task nodes selected in the node selection table 1201.

The user sets a search work flow that serves as the search condition by using the node selection table 1201 and the order setting table 1202 on the screen 1200, and then operates the operation button 1203. At this time, the terminal 101 transmits a search request to the work data management server 100 (step S107). The search request includes the search work flow as the search condition.

When the search request is received, the work data management server 100 performs the work flow search processing (step S108). Details of the work flow search processing are described below.

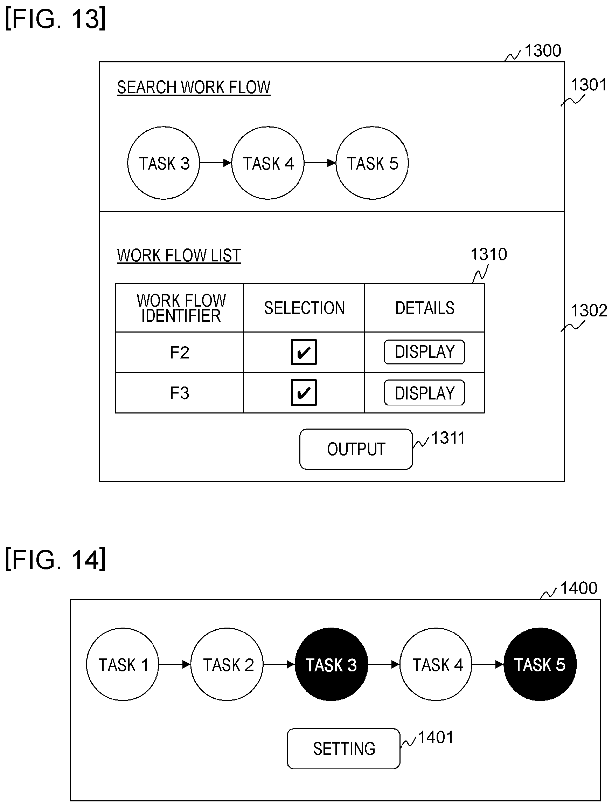

The work data management server 100 presents a screen (user interface) for displaying a result (search result) of the work flow search processing (step S109). For example, a screen 1300 as illustrated in FIG. 13 is presented.

The screen 1300 includes a display field 1301 and a display field 1302. The display field 1301 is a field for displaying the search work flow serving as the search condition. The display field 1302 is a field for displaying the search result. The display field 1302 includes a work flow list 1310 and an operation button 1311.

The work flow list 1310 is a list of the work flows searched based on the search condition. In the work flow list 1310, entries including "work flow identifier", "selection", and "details" are displayed. The "selection" is a field for selecting the work flow whose work data is to be output. In the "details", a display button for displaying a screen for selecting the task (task node) whose work data is to be output is displayed. In a case where the display button is operated, a screen for displaying the directed graph representing the work flow is presented. For example, a screen 1400 as illustrated in FIG. 14 is presented.

The user selects a task whose work data is to be acquired from among the tasks of the work flow displayed on the screen 1400, and operates an operation button 1401. In FIG. 14, task 3 and task 5 are selected.

The selection of the task whose work data is to be acquired may be performed using the search work flow. In this case, the work data of the task selected using the search work flow from the designated work flow is acquired.

The description returns to FIG. 13. The operation button 1311 is a button for outputting the work data. When the operation button 1311 is operated, the terminal 101 transmits an output request to the work data management server 100 (step S110). The output request includes one or more combinations of the work flow and a node group.

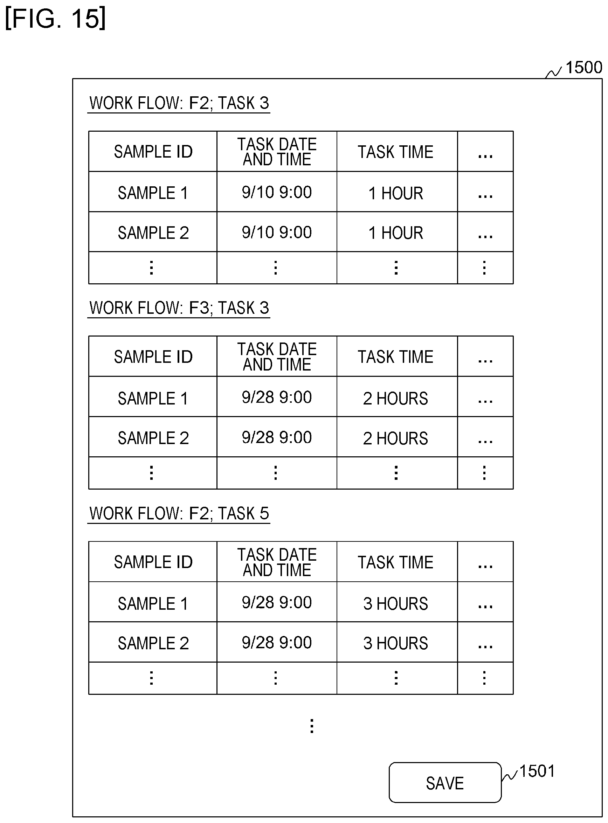

When the output request is received, the work data management server 100 acquires the work data from the work data DB 320 and transmits the acquired work data to the terminal 101 as an acquisition result (step S111). At this time, a screen 1500 as illustrated in FIG. 15 may be presented.

The screen 1500 displays the work data corresponding to the selected work flow and task node group. The user confirms the work data displayed on the screen 1500, and operates an operation button 1501 to save the work data in a predetermined data format. Note that the work data management server 100 may transmit the work data in an arbitrary data format such as CSV instead of displaying the screen 1500.

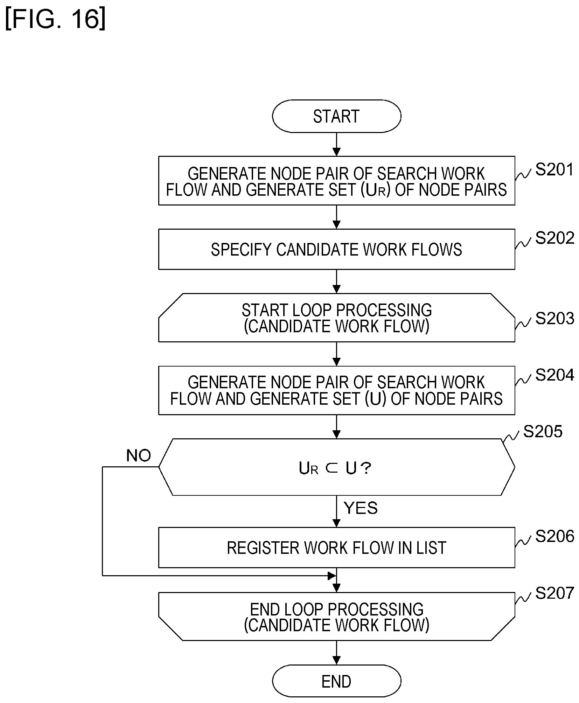

FIG. 16 is a flowchart illustrating an example of the work flow search processing performed by the work data management server 100 of the first embodiment.

The work data management server 100 generates a node pair of the search work flow and generates a set (U_{R}) including the node pair as an element (step S201). Specifically, the following processing is performed.

(S201-1) The work data management server 100 selects one task node from the directed graph representing the search work flow. Here, it is assumed that the task node is selected in the order of tasks. The selected task node is referred to as a start node.

(S201-2) The work data management server 100 specifies a task node reachable by following the directed graph in a task order direction with the start node as a starting point, generates a pair of the start node and the specified task node as the node pair, and records the node pair in the work area as an element of the set (U_{R}). Note that the work data management server 100 generates the node pair in a data format in which it can be seen that the specified task node is performed later than the start node.

(S201-3) The work data management server 100 determines whether or not the processing has been completed for all the task nodes included in the search work flow.

In a case where the processing has not been completed for all the task nodes included in the search work flow, the work data management server 100 returns to S201-1. In a case where the processing has been completed for all the task nodes included in the search work flow, the work data management server 100 ends the processing of step S201.

In the case of the search work flow illustrated in FIG. 13, three node pairs of (task 3 and task 4), (task 3 and task 5), and (task 4 and task 5) are generated.

Next, the work data management server 100 specifies candidate work flows based on the search condition (step S201).

Specifically, the work data management server 100 specifies the work flow including all the task nodes included in the search work flow by referring to the node/work flow correspondence management DB 322.

Next, the work data management server 100 starts loop processing for the candidate work flows (step S203). Here, the work data management server 100 selects one candidate work flow.

Next, the work data management server 100 generates a node pair of the candidate work flow by using the work flow DB 321, and generates a set (U) including the node pair as an element (step S204). A method of generating the node pair is the same as the method described in step S201.

Next, the work data management server 100 determines whether or not the set (U_{R}) is a subset of the set (U) (step S205).

In a case where the set (U_{R}) is not a subset of the set (U), the work data management server 100 proceeds to step S207.

In a case where the set (U_{R}) is a subset of the set (U), the work data management server 100 registers the candidate work flow in the list (step S206), and then proceeds to step S207.

In step S207, the work data management server 100 determines whether or not the processing has been completed for all the candidate work flows (step S207).

In a case where the processing has not been completed for all the candidate work flows, the work data management server 100 returns to step S203. In a case where the processing has been completed for all the candidate work flows, the work data management server 100 ends the work flow search processing. The work data management server 100 transmits the list as the search result.

In the first embodiment, the candidate work flows can be quickly narrowed down by using the correspondence relationship between the task node and the work flow. In addition, it is possible to quickly specify the work flow including the task nodes in the designated order by comparing the sets including the node pairs of the work flows as elements. As a result, the search of the work flow can be performed faster than the search based on graph comparison.

### Second Embodiment

In a second embodiment, processing contents of work flow search processing are different. Hereinafter, the second embodiment will be described focusing on the difference from the first embodiment.

A configuration of a system of the second embodiment is the same as that of the first embodiment. A hardware configuration and a software configuration of a work data collection device 110 and a work data management server 100 of the second embodiment are the same as those of the first embodiment. In addition, a data structure of data stored in a database managed by the work data collection device 110 and the work data management server 100 of the second embodiment is the same as that of the first embodiment.

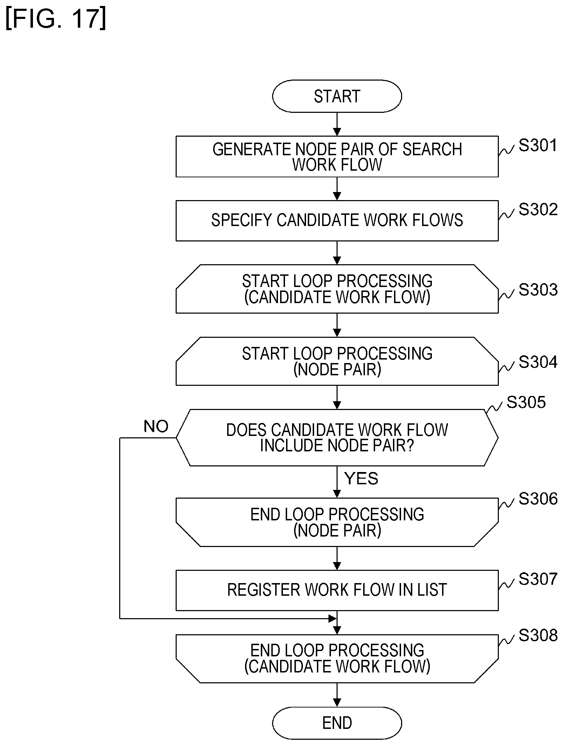

FIG. 17 is a flowchart illustrating an example of work flow search processing performed by the work data management server 100 of the second embodiment.

The work data management server 100 generates a node pair of a search work flow (step S301). Specifically, the following processing is performed.

(S301-1) The work data management server 100 selects one task node from a directed graph representing the search work flow. Here, it is assumed that a task node is selected in the order of tasks. The selected task node is referred to as a start node.

(S301-2) The work data management server 100 specifies a task node reachable by following the directed graph in a task order direction with the start node as a starting point, and generates a pair of the start node and the specified task node as the node pair. Note that the work data management server 100 generates the node pair such that the start node can be identified. The work data management server 100 stores the node pair in a work area.

(S301-3) The work data management server 100 determines whether or not the processing has been completed for all the task nodes included in the search work flow.

In a case where the processing has not been completed for all the task nodes included in the search work flow, the work data management server 100 returns to S301-1. In a case where the processing has been completed for all the task nodes included in the search work flow, the work data management server 100 ends the processing of step S301.

Next, the work data management server 100 specifies candidate work flows based on a search condition (step S302). The processing of step S302 is the same as the processing of step S202.

Next, the work data management server 100 starts loop processing for the candidate work flows (step S303). The processing of step S303 is the same as the processing of

### step S203.

Next, the work data management server 100 starts loop processing for the node pair of the search work flow (step S304).

Next, the work data management server 100 determines whether or not the candidate work flow includes the selected node pair (step S305).

Specifically, the following processing is performed. The work data management server 100 determines whether or not the task node included in the node pair is reachable by following the directed graph (candidate work flow) in the task order direction with the start node of the node pair as a starting point. In a case where the task node included in the node pair is reachable, the work data management server 100 determines that the candidate work flow includes the selected node pair.

In a case where the candidate work flow does not include the selected node pair, the work data management server 100 ends the loop processing for the node pair, and proceeds to step S308.

In a case where the candidate work flow includes the selected node pair, the work data management server 100 determines whether or not the processing has been completed for all the node pairs (step S306).

In a case where the processing has not been completed for all the node pairs, the work data management server 100 returns to step S304.

In a case where the processing has been completed for all the node pairs, the work data management server 100 registers the candidate work flow in a list (step S307), and then proceeds to step S308.

In step S308, the work data management server 100 determines whether or not the processing has been completed for all the candidate work flows (step S308).

In a case where the processing has not been completed for all the candidate work flows, the work data management server 100 returns to step S303. In a case where the processing has been completed for all the candidate work flows, the work data management server 100 ends the work flow search processing.

In the second embodiment, since it is not necessary to generate the node pair of the candidate work flow, an effect of reducing processing costs required for search as compared with the first embodiment can be expected.

### Third Embodiment

A third embodiment is different from the first embodiment in that information specific to work is included in a search condition. Hereinafter, the third embodiment will be described focusing on the difference from the first embodiment.

A configuration of a system of the third embodiment is the same as that of the first embodiment. A hardware configuration and a software configuration of a work data collection device 110 and a work data management server 100 of the third embodiment are the same as those of the first embodiment. In addition, a data structure of data stored in a database managed by the work data collection device 110 and the work data management server 100 of the third embodiment is the same as that of the first embodiment.

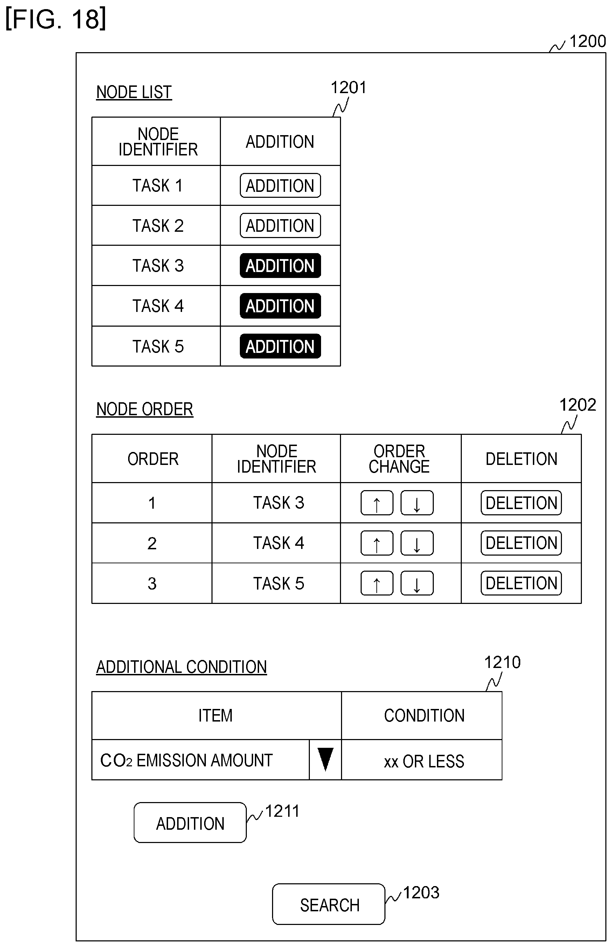

The third embodiment is different from the first embodiment in a method of setting the search condition. FIG. 18 is a view illustrating an example of a screen presented by the work data management server 100 of the third embodiment.

A screen 1200 newly includes an additional condition setting table 1210 and an operation button 1211. The additional condition setting table 1210 is a table for setting an additional condition for searching for a work flow separately from a condition related to a task node. The operation button 1211 is an operation button for adding a work condition. In FIG. 18, a condition related to a CO₂ emission amount is designated as the additional condition.

In the third embodiment, processing contents of work flow search processing are partially different. Specifically, processing of specifying candidate work flows (step S201) is different from that of the first embodiment.

First, the work data management server 100 specifies a work flow including all the task nodes included in a search work flow by referring to a node/work flow correspondence management DB 322.

Next, the work data management server 100 specifies a work flow satisfying the additional condition by referring to a work flow DB 321 and referring to work flow metadata 500 of the specified work flow.

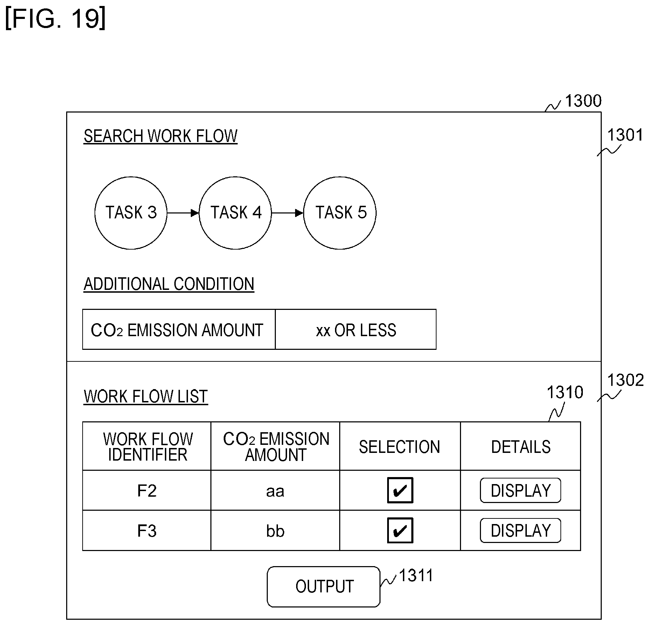

In the third embodiment, contents of a screen for displaying a result of the work flow search processing are partially different. FIG. 19 is a view illustrating an example of a screen presented by the work data management server 100 of the third embodiment. In a display field 1301, the additional condition is displayed in addition to the search work flow. Further, a work flow list 1310 includes an item designated as the additional condition.

Note that the present invention is not limited to the embodiments described above, but includes various modified examples. For example, the configurations of the embodiments described above have been described in detail in order to explain the present invention in an easy-to-understand manner, and the present invention is not necessarily limited to those having all the configurations described. In addition, with respect to part of the configuration of each embodiment, it is possible to add, delete, and replace other configurations.

In addition, some or all of the above-described configurations, functions, processing units, processing means, and the like may be implemented by hardware, for example, by designing with an integrated circuit. In addition, the present invention can also be implemented by a program code of software that implements the functions of the embodiments. In this case, a storage medium in which the program code is recorded is provided to a computer, and a processor included in the computer reads the program code stored in the storage medium. In this case, the program code itself read from the storage medium implements the functions of the above-described embodiments, and the program code itself and the storage medium storing the program code constitute the present invention. As the storage medium for supplying such a program code, for example, a flexible disk, a CD-ROM, a DVD-ROM, a hard disk, a solid state drive (SSD), an optical disk, a magneto-optical disk, a CD-R, a magnetic tape, a nonvolatile memory card, a ROM, or the like is used.

In addition, the program code for implementing the functions described in the present embodiment can be implemented by a wide range of programs or script languages such as assembler, C/C++, perl, Shell, PHP, Python, Java, and the like.

Furthermore, the program code of the software that implements the functions of the embodiments may be distributed via a network to be stored in storage means such as a hard disk or a memory of a computer or a storage medium such as a CD-RW or a CD-R, and a processor included in the computer may read and execute the program code stored in the storage means or the storage medium.

In the above-described embodiments, the control lines and information lines indicate those that are considered necessary for explanation, and do not necessarily indicate all the control lines and information lines in the product. All the configurations may be connected to each other.

## Claims

1. A computer system comprising:
a processor;
a storage device connected to the processor; and
a network interface connected to the processor, wherein
the computer system is configured to:
hold a first database for managing a directed graph that represents a work flow defining procedures of a plurality of tasks and includes nodes representing the tasks and directed edges connecting the nodes according to an order of the tasks, and a second database for managing a correspondence relationship between the node and the work flow;
receive a search request including a search work flow expressed as a directed graph including at least two nodes;
generate a first node pair which is a pair of the nodes included in the search work flow and in which an order relationship of the nodes in the search work flow is designated;
specify the work flows including all the nodes included in the search work flow as candidate work flows by referring to the second database; and
search for the candidate work flow including all the generated first node pairs from among the candidate work flows by referring to the first database, and output the candidate work flow as a search result.

2. The computer system according to claim 1, wherein the computer system is configured to:
hold a third database for managing work data acquired in work performed based on the work flow for each work flow; and
present an interface for acquiring the work data related to the candidate work flow included in the search result from the third database.

3. The computer system according to claim 1, wherein the computer system is configured to:
generate a second node pair which is a pair of the nodes included in the candidate work flow and in which an order relationship of the nodes in the candidate work flow is designated; and
compare a set of the first node pairs and a set of the second node pairs, and specify the candidate work flow in which the set of the first node pairs is a subset of the set of the second node pairs.

4. The computer system according to claim 1, wherein the computer system is configured to, for each first node pair, specify the candidate work flow in which a subsequent node in the first node pair is reachable by following the candidate work flow according to the order of the tasks with a preceding node in the first node pair as a starting point.

5. A search method for a work flow defining procedures of a plurality of tasks, the search method being executed by a computer system that includes a processor, a storage device connected to the processor, and a network interface connected to the processor and is configured to hold a first database for managing a directed graph that represents the work flow and includes nodes representing the tasks and directed edges connecting the nodes according to an order of the tasks, and a second database for managing a correspondence relationship between the node and the work flow, the search method comprising:
a first step of receiving, by the computer system, a search request including a search work flow expressed as a directed graph including at least two nodes;
a second step of generating, by the computer system, a first node pair which is a pair of the nodes included in the search work flow and in which an order relationship of the nodes in the search work flow is designated;
a third step of specifying, by the computer system, the work flows including all the nodes included in the search work flow as candidate work flows by referring to the second database; and
a fourth step of searching for, by the computer system, the candidate work flow including all the generated first node pairs from among the candidate work flows by referring to the first database, and outputting the candidate work flow as a search result.

6. The search method according to claim 5, wherein
the computer system is configured to hold a third database for managing work data acquired in work performed based on the work flow for each work flow, and
the search method comprises a step of presenting, by the computer system, an interface for acquiring the work data related to the candidate work flow included in the search result from the third database.

7. The search method according to claim 5, wherein the third step includes:
a step of generating, by the computer system, a second node pair which is a pair of the nodes included in the candidate work flow and in which an order relationship of the nodes in the candidate work flow is designated; and
a step of comparing, by the computer system, a set of the first node pairs and a set of the second node pairs, and specifying the candidate work flow in which the set of the first node pairs is a subset of the set of the second node pairs.

8. The search method according to claim 5, wherein the third step includes a step of specifying, by the computer system, the candidate work flow in which a subsequent node in the first node pair is reachable by following the candidate work flow according to the order of the tasks with a preceding node in the first node pair as a starting point, for each first node pair.
